# FASCICULE DE BREVET EUROPEEN

(11) **EP 3 818 442 B1**
(45) Date de publication et mention de la délivrance du brevet: **08.05.2024**
(21) Numéro de dépôt: 19749394.3
(22) Date de dépôt: 27.06.2019
(51) Int. Cl.: G06F 9/455

(54) **GESTION DE LA MISE EN APPLICATION D'UNE POLITIQUE DANS UN ENVIRONNEMENT SDN DE RÉSEAU DE COMMUNICATION**
VERWALTUNG DER ANWENDUNG EINER RICHTLINIE IN EINER SDN-UMGEBUNG EINES KOMMUNIKATIONSNETZES
MANAGEMENT OF THE APPLICATION OF A POLICY IN AN SDN ENVIRONMENT OF A COMMUNICATION NETWORK

(30) Priorité: 03.07.2018 FR 1856129
(43) Date de publication de la demande: 12.05.2021
(73) Titulaire: Orange, 92130 Issy-les-Moulineaux (FR)
(72) Inventeur: CHAWKI, Jamil, 92326 Châtillon Cedex (FR)
(74) Mandataire: Vidon Brevets & Stratégie
(86) Numéro de dépôt international: PCT/FR2019/051586
(87) Numéro de publication internationale: WO 2020/008126

(56) Documents cités:
- WO-A1-2017/137004
- CHAITHAN PRAKASH ET AL: "PGA: Using Graphs to Express and Automatically Reconcile Network Policies", SPECIAL INTEREST GROUP ON DATA COMMUNICATION, ACM, 2 PENN PLAZA, SUITE 701 NEW YORK NY 10121-0701 USA, 17 août 2015 (2015-08-17), pages 29-42, XP058071210, DOI: 10.1145/2785956.2787506 ISBN: 978-1-4503-3542-3
- HANTOUTI HAJAR ET AL: "A Novel SDN-based Architecture and Traffic Steering Method for Service Function Chaining", 2018 INTERNATIONAL CONFERENCE ON SELECTED TOPICS IN MOBILE AND WIRELESS NETWORKING (MOWNET), IEEE, 20 juin 2018 (2018-06-20), pages 1-8, XP033383130, DOI: 10.1109/MOWNET.2018.8428930
- GUANGLEI LI ET AL: "Application-aware and Dynamic Security Function Chaining for Mobile Networks", JOURNAL OF INTERNET SERVICES AND INFORMATION SECURITY, vol. 7, no. 4, 1 novembre 2017 (2017-11-01), pages 21-34, XP055568831,

## Description

### 1. Domaine de l'invention

Le domaine de l'invention est celui de la virtualisation des fonctions dans un réseau de télécommunication. Plus précisément, l'invention concerne la gestion de politique d'application via de fonctions logicielles virtualisées dans une architecture SDN (en anglais « Software-Defined Networking »).

### 2. Art antérieur et ses inconvénients

On rappelle que l'architecture SDN propose de découpler les fonctions de contrôle du réseau des fonctions d'acheminement des données à proprement parler, de sorte à permettre le contrôle du réseau par des fonctions logicielles programmables et à isoler l'infrastructure sous-jacente du réseau des applications et services réseau. Selon la recommandation Y.3300 (« Framework of software-defined networking ») de l'organisme de normalisation ITU-T (en anglais « International Telecommunication Union - Telecommunication »), l'architecture SDN est définie comme un ensemble de techniques permettant de programmer, d'orchestrer, de contrôler et de gérer directement les ressources du réseau, ce qui facilite la conception, la fourniture et l'exploitation de services réseau.

La couche de contrôle SDN, ou contrôleur SDN (en anglais « SDN control layer »), permet de contrôler dynamiquement le comportement des ressources/éléments du réseau selon les instructions d'une application SDN. Les applications SDN spécifient comment les ressources réseau doivent être contrôlées et allouées, en interagissant avec la couche de contrôle SDN via les interfaces de contrôle d'application NBI (en anglais « North Bound Interface » NBI).

Les informations de commande de la couche de contrôle SDN vers les ressources/éléments de réseau sont ensuite délivrées via des interfaces de contrôle de ressources SBI (en anglais « South Bound Interface).

Cette architecture SDN permet ainsi la mise en oeuvre d'une plateforme logicielle (dite « plateforme SDN ») programmable et flexible offrant une vue globale et logique du réseau et une gestion dynamique des ressources hétérogènes du réseau.

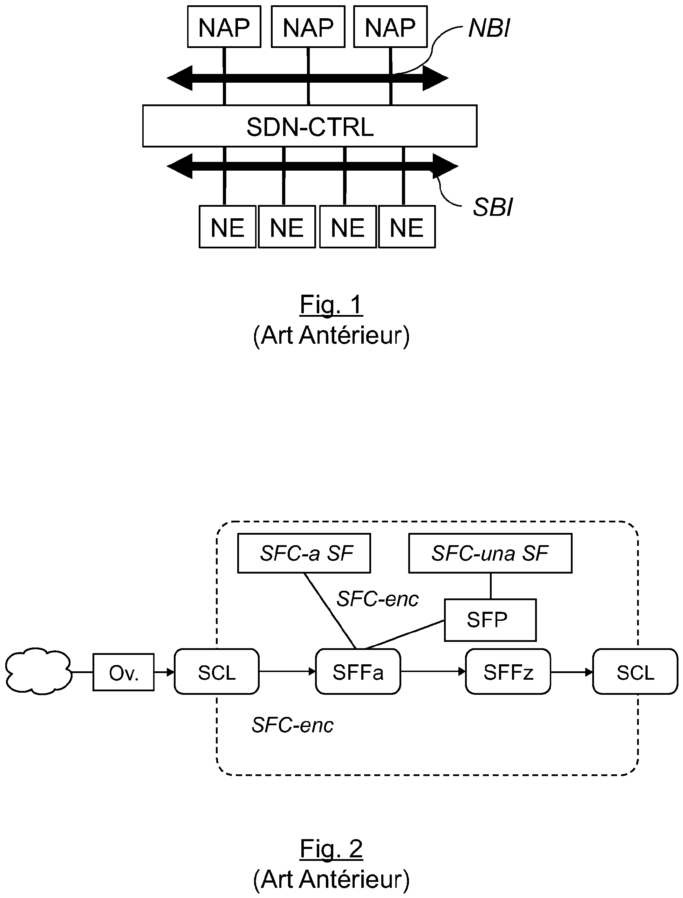

Plus précisément, et en référence à la **figure 1**, l'architecture SDN est structurée en trois couches principales, séparées entre elles par les interfaces SBI et NBI, à savoir :
- une couche de ressources réseau constituée par des éléments de réseau NE (en anglais « Network Elements ») physiques ou virtuels, par exemple des routeurs, commutateurs, réseaux de diffusion de contenus (en anglais « Content Delivery Network », CDN) ;
- un contrôleur SDN-CTRL comportant des fonctions d'abstraction et de programmation des éléments de réseau NE de la couche de ressources réseau et offrant des gestionnaires de service de base comme la gestion des noeuds et des liens associés ;
- une couche de services applicatifs réseau NAP (en anglais « Network Applications ») comportant un ensemble d'applications de gestion (par exemple de gestion de réseaux privés virtuels VPN), de supervision, de connectivité vers une plateforme d'un réseau en nuage.

Dans une telle architecture SDN, une fonction service SF désigne une fonction embarquée dans un environnement, qui peut être co-localisée avec d'autres fonctions service au sein du même équipement, comme par exemple un routeur, un serveur, un commutateur, etc. Une fonction service SF correspond par exemple à une fonction de traduction d'adresse réseau (en anglais NAT « Network Address Translation »), une fonction de pare-feu, une fonction d'optimisation du protocole de contrôle de transmission TCP (en anglais « Transmission Control Protocol Optimizer »), une fonction de détection et d'élimination de malware, une fonction de control parental, une fonction d'optimisation du cache, une fonction d'inspection de paquet de type DPI (en anglais « Deep Packet Inspection »), une fonction de répartition de charge ...

Par ailleurs, le chainage de fonctions service SFC (en anglais « Service Function Chaining ») tel que décrit dans le document IETF RFC 7665 (en anglais « Internet Engineering Task Force Request For Comments 7665 »), permet de simplifier le déploiement des fonctions service SF (en anglais « Service Function »). Un domaine de fonctions service permet de mettre en oeuvre ce chainage en fournissant une pluralité de fonctions service SF pouvant être liées les unes aux autres pour fournir un service. Ce domaine est attaché à des classificateurs de service (en anglais « Service Function Classifier ») qui classent les flux de trafic et décident quel(s) paquets entre(nt) dans une chaîne du domaine, grâce à des règles fournis par le contrôleur SDN.

Un exemple d'un tel domaine SFC, illustré **en** **figure 2**, comprend notamment les composants suivants :
- un classificateur SCL permettant, tel que décrit ci-dessus, de déterminer quel(s) paquet(s) doit entrer dans une chaine de fonctions service, à partir d'une table de politique ;
- un transmetteur de fonctions service SFF (en anglais « Service Function Forwarder ») redirigeant les paquets vers la fonction de service SF adéquate, sur la base d'information d'encapsulation SFC ;
- un proxy de fonctions service SFP gérant les informations d'encapsulation SFC pour les fonctions service SF non compatibles *SFC-una* (dites « unaware » en anglais) ;
- une pluralité de fonctions service SF responsables du traitement spécifique des paquets.

Ces différents composants gèrent par exemple un graphe défini par un utilisateur, via une application, ce graphe décrivant un chainage de fonctions service SFC, dans lequel chaque noeud du graphe est une fonction service SF.

En particulier, le chainage de fonctions service SFC permet donc de définir une liste ordonnée de fonctions service réseau créant ainsi une chaine, ou un enchaînement, de fonctions service, à travers laquelle un paquet doit passer.

Pour ce faire, le chainage de fonctions service SFC s'appuie sur l'entête d'encapsulation SFC (en anglais « SFC encapsulation »), qui fournit des informations sur le chainage de fonctions de service à travers lequel un paquet du flux de trafic doit passer. L'entête NSH (en anglais « Network Service Header »), tel que décrit dans le document IETF RFC 8300, est un exemple d'encapsulation SFC qui permet de définir un plan de service complet portant des informations de fonctions de service.

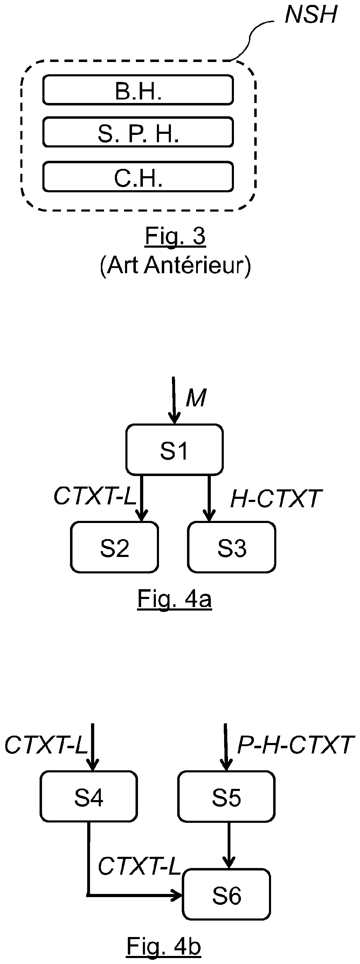

Cet entête NSH est ajouté, par un classificateur, aux paquets d'un flux de trafic et indique à travers quelles fonctions service SF (pare-feu, DPI, répartition ou équilibrage de charge ...) ils doivent passer. Un entête NSH est composé notamment des éléments suivants, illustrés en figure 3 :
- Base Header (B.H.) : comprend des informations sur l'entête de service et le protocole de charge utile ;
- Service Path Header (S.P.H.) : reflète la sélection d'un chemin identifié par un identifiant SPI (en anglais « Service Path Identifier »). La localisation du paquet dans le chemin est donnée par l'index de service SI (en anglais Service Index). L'identifiant SPI et l'index de service SI indiquent au paquet le chemin à suivre, sans nécessiter la configuration de métadonnées ou d'informations de paquet.
- Context Header (C.H.) : porte des métadonnées relatives à un chemin pouvant être partagées par les fonctions service SF.

L'encapsulation NSH permet notamment un chainage de service indépendant de la topologie du réseau, en fournissant les informations d'identification de chemin nécessaires pour réaliser un chemin de fonctions service.

De plus, l'encapsulation NSH fournit un mécanisme de transport de métadonnées partagées entre les entités du réseau (classificateurs, transmetteurs de fonctions service ...) et les fonctions service SF. Ainsi, le partage de métadonnées permet aux fonctions service SF de partager des résultats de classification initiaux et intermédiaires avec des fonctions service SF plus loin dans un chemin.

La sémantique des métadonnées est communiquée via une couche de contrôle aux noeuds participants d'un chemin.

Enfin, l'encapsulation NSH est indépendante de l'encapsulation de transport dans le réseau et l'entête NSH constitue donc un entête commun et standard pour le chainage de fonctions service dans tout le réseau. L'encapsulation NSH permet donc la définition de chaines de fonctions service flexibles dans un plan de services dirigé par application.

Par ailleurs, il est connu de définir des politiques applicables à des éléments ou groupes d'éléments ou d'équipements physiques d'un réseau, par exemple via un composant du contrôleur SDN, appelé module de politique de groupe GBP (en anglais « Group-Based Policy »).

Chaque équipement du réseau (par exemple, une machine hôte, un port de machine, une machine virtuelle, etc.) est vu comme un point de terminaison (en anglais « endpoint »), plusieurs points de terminaison pouvant être groupés selon des règles de politique communes et formant donc des groupes de points de terminaison (en anglais « End Point Group »). Des contrats définissent comment les points de terminaison et/ou les groupes de points de terminaison peuvent communiquer.

Dans l'état actuel de la technique de virtualisation de fonctions d'un réseau SDN, la mise en application d'une politique est centralisée, et nécessite qu'une fonction service SF transmette le paquet à un contrôleur qui lui retourne les actions de la politique à mettre en oeuvre, entraînant un grand nombre d'échanges entre le contrôleur et les fonctions service SF. De plus, lorsqu'une politique doit être mise en application, la configuration de chaque fonction service SF doit être modifiée, pour tous les noeuds du réseau concernés par la politique, ou alors cela nécessite l'instanciation d'une nouvelle chaine de fonctions service.

Le document intitulé « PGA : Using Graphs to Express and automatically Reconcile Network Policies" de Chaithan Prakash ETAL (SPECIAL INTEREST GROUP ON DATA COMMUNICATION, ACM, 2 PENN PLAZA, SUITE 701 NEW YORK NY 10121-0701 USA, (2015-08-17), pages 29-42) décrit une technique permettant de résoudre les conflits entre une pluralité de politique de réseau, dans un réseau SDN. Le document intitulé « A Novel SDN-based Architecture and Traffic Steering Method for Service Function Chaining" de Hantouti Hajar ET AL (INTERNATIONAL CONFERENCE ON SELECTED TOPICS IN MOBILE AND WIRELESS NETWORKING (MOWNET), IEEE, 2018-06-20, pages 1-8) décrit une technique de pilotage de trafic via la mise en oeuvre d'un nouvel entête dans un réseau SDN. Enfin, le document de brevet n° WO 2017/1237004 décrit une technique de transfert de paquets le long d'un chemin de fonction service (SFP), basées sur l'utilisation d'un entête NSH et d'un descripteur de chemin de service porté par cet entête.

Les techniques actuelles ne permettent donc pas la gestion d'une politique d'application granulaire et dynamique, permettant de viser tous les points de terminaison d'un réseau, sans allouer de nouvelles ressources (en terme de calcul et de stockage).

La présente technique propose un mécanisme de gestion d'une politique d'application dans un réseau qui ne présente pas ces inconvénients.

### 3. Exposé de l'invention

La présente invention concerne un procédé de gestion d'une politique d'application de règles dans un réseau de communication virtualisé, tel que défini dans la revendication 1.

Par exemple, la chaine de politique d'application EC1 décrit au moins un enchainement SFC1 d'au moins une des fonctions service SF*i* en fonction d'au moins une information représentative d'un ensemble prédéfini de règles de communication, dit contrat, entre un premier et un deuxième groupe d'équipements du réseau de communication EPG1, EPG2, le premier groupe EPG1 comprenant au moins un équipement émetteur d'au moins un paquet et le deuxième groupe EPG2 comprenant au moins un équipement destinataire d'au moins un paquet, et/ou d'une information représentative d'au moins un équipement EP10 dans le premier groupe EPG1 et/ou d'au moins une caractéristique de paquet.

Selon une caractéristique particulière, le contexte local comprend au moins une définition d'au moins une action à effectuer par la fonction service SF*i*.

Selon un mode de réalisation particulier, la transmission de l'entête d'encapsulation à au moins un classificateur SCL comprend une étape de configuration du classificateur de service SCL de sorte à ce que le classificateur de service SCL délivre, pour au moins un paquet entrant, au moins un paquet enrichi avec l'entête d'encapsulation.

Selon un autre aspect, la présente invention concerne un procédé de traitement d'une politique d'application de règles dans un réseau de communication, tel que défini dans la revendication 5.

Selon une caractéristique particulière, le traitement comprend une étape d'exécution d'au moins une action définie dans le contexte local de politique d'application, en tenant compte d'au moins une caractéristique du paquet enrichi et délivrant un résultat comprenant au moins une information d'identification d'au moins une fonction de service destinatrice *SFj* du paquet enrichi traité.

Selon un mode de réalisation particulier, le traitement comprend également une étape de mise à jour de l'entête d'encapsulation en fonction du résultat de l'étape d'exécution.

Selon un autre aspect, l'invention concerne un module contrôleur SDN, comprenant :
- des moyens de génération, à partir d'un ensemble de règles, dit modèle M, décrivant une politique d'application de règles dans un réseau de communication virtualisé comprenant des fonctions virtualisées, dites fonctions service SF, d'un entête d'encapsulation comprenant un contexte relatif au modèle M et d'au moins un contexte local de politique d'application associé à au moins une des fonctions service SF*i* ;
- des moyens de transmission du contexte local à la fonction service SFi ;
- des moyens de transmission de l'entête d'encapsulation à au moins un routeur de paquets, dit classificateur SCL.

Le module contrôleur SDN est notamment apte à mettre en oeuvre les étapes du procédé de gestion d'une politique d'application de règles tel que décrit précédemment et ci-après, selon ses différents modes de réalisation.

La présente invention concerne également un module fonction virtualisée, dit module fonction service, dans un réseau de communication virtualisé, tel que défini dans la revendication 8.

Le module de logique de politique d'application (PEL) est notamment apte à mettre en oeuvre les étapes du procédé de traitement d'une politique d'application de règles tel que décrit précédemment et ci-après, selon ses différents modes de réalisation.

Selon encore un autre aspect, l'invention concerne un système comprenant un module contrôleur SDN et un module fonction service, tels que décrits précédemment et ci-après, selon ses différents modes de réalisation, ainsi qu'un routeur de paquets, dit classificateur SCL recevant un entête d'encapsulation du contrôleur SDN et délivrant, pour au moins un paquet entrant, au moins un paquet enrichi avec l'entête d'encapsulation.

Un autre aspect concerne un ou plusieurs programmes d'ordinateur comportant des instructions pour la mise en oeuvre d'un procédé de gestion et/ou d'un procédé de traitement d'une politique d'application de règles, tels que décrits ci-dessus et ci-après, lorsque ce ou ces programmes sont exécutés par au moins un processeur.

Selon encore un autre aspect, il est proposé un ou plusieurs supports d'enregistrement non transitoire lisibles par un ordinateur, et comportant des instructions d'un ou plusieurs programmes d'ordinateur comprenant des instructions pour la mise en oeuvre d'un procédé de gestion et/ou d'un procédé de traitement d'une politique d'application de règles, tels que décrits ci-dessus et ci-après, lorsque ce ou ces programmes sont exécutés par au moins un processeur.

### 4. Liste des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :
- La **figure 1** déjà décrite représente l'architecture SDN de l'état actuel de la technique ;
- la **figure 2** déjà décrite représente un exemple de domaine SFC de l'état actuel de la technique ;
- la **figure 3** déjà décrite représente un exemple de contenu d'un entête NSH de l'état actuel de la technique ;
- **la** **figure 4a** illustre les principales étapes du procédé de gestion d'une politique d'application de règles selon un mode de réalisation de l'invention ;
- **la** **figure 4b** illustre les principales étapes du procédé de traitement d'une politique d'application de règles selon un mode de réalisation de l'invention ;
- **la** **figure** 5 illustre un exemple d'intégration, dans une architecture SDN, du procédé et des modules de gestion d'une politique d'application selon un mode de réalisation de l'invention ;
- **la** **figure** 6 illustre un exemple de chaine d'une politique d'application selon un mode de réalisation de l'invention ;
- **la** **figure** 7 illustre un exemple de module/plugin de logique de politique d'application (PEL) d'une fonction service SF selon un mode de réalisation de l'invention ;
- **les** **figures 8** **et** **9** illustrent respectivement, pour un exemple de mise en oeuvre de l'invention, les entités d'un réseau et une chaine de politique d'application, selon un mode de réalisation de l'invention.

### 5. Description détaillée de modes de réalisation de l'invention

Le principe général de la technique proposée repose sur une coopération entre le plan de transfert et le plan de contrôle, dans un réseau de communication virtualisé comprenant des fonctions virtualisées, ou fonctions de service.

Cette coopération est notamment mise en oeuvre d'une part via la prise en compte, pour le transfert des paquets, d'un contexte relatif à un ensemble de règles décrivant une politique, et d'autre part via la prise en compte d'un contexte local à chaque fonction service.

Ainsi, la technique proposée permet de gérer un chainage de fonctions service pour appliquer les règles de la politique, de manière dynamique et distribuée, par rapport aux techniques de l'art antérieur.

De plus, la technique proposée est basée sur une modélisation d'une politique d'application de règles dans un réseau, afin de gérer de manière contextualisée cette politique au niveau des fonctions réseau requises.

Pour ce faire, la technique proposée repose par exemple sur une architecture SDN existante et les fonctionnalités de chainage de fonctions service connues.

Ainsi, selon la technique proposée, un modèle, défini par un utilisateur comme un ensemble de règles décrivant une politique d'application de règles, est interprété par le contrôleur SDN qui le traduit en configurations techniques, via la création notamment d'une chaine de fonctions service, correspondant à un ensemble de règles de traitement de paquets par une fonction service et des actions à mettre en oeuvre par les fonctions service de la chaine.

Cette chaine de fonctions service, dite chaine de politique d'application, peut être créée sous la forme d'un graphe de politique d'application, lequel est traité par exemple par un module de politique d'application, dans le contrôleur SDN, de façon à délivrer une pluralité de contextes locaux destinés au fonctionnement de chacune des fonctions service de la chaine prédéfinie.

De cette manière, la gestion d'une nouvelle politique d'application de règles ne nécessite pas d'instancier de nouvelles ressources car le contexte local associé à chaque fonction service permet de gérer de manière granulaire la politique globale.

En effet, grâce à ce contexte local, chaque fonction service dispose d'une « intelligence » propre lui permettant d'être capable de mettre en oeuvre les actions adéquates définies par le modèle.

La technique proposée permet donc un chaînage de politique d'application de règles distribué au niveau de chaque fonction service, via un module de politique d'application qui gère le contexte local reçu et les actions de politique d'application. Ce module de politique d'application permet la sélection, via le modèle préalablement interprété par le contrôleur SDN, de l'action adéquate, basée sur la chaine de politique d'application préalablement définie. Ce module de politique d'application d'une fonction service permet de plus d'indiquer à la fonction service suivante quelle sera l'action suivante de politique d'application à mettre en oeuvre.

La technique proposée peut aisément être mise en oeuvre dans un environnement de type orienté-modèle tel que OpenDaylight, ou ONOS. En effet, ces techniques proposent un contrôleur SDN capable de communiquer à des équipements physiques et virtuels via différents interfaces et protocoles (Netconf, OpenFlow, OVSDB...), intégrant notamment les modules de chainage de fonctions service SFC avec le protocole NSH de paquets, ainsi qu'un module de politique de groupe GBP, déjà décrit ci-dessus.

Plus précisément, la technique proposée se base sur le protocole NSH, et plus particulièrement l'entête de contexte NSH, prévu dans la norme mais non défini, qui permet de transporter des métadonnées propres au service délivré. La technique proposée permet de structurer ces métadonnées à partir d'un modèle qui exprime les cas d'usages client de politique d'application, de manière simple et agnostique (indépendante du réseau, des éléments virtuels ou physiques mis en oeuvre, du protocole de transport, ...).

La technique proposée permet donc de gérer une chaine de politique d'application au niveau d'une fonction service, en partant d'un modèle qui permet de faire abstraction de la complexité de configuration du réseau et des différentes fonctions service à mettre en oeuvre, et qui permet de se focaliser sur l'expression du besoin fonctionnel, d'un point de vue applicatif (par exemple, interdire aux abonnés d'un réseau mobile l'accès à certains sites internet).

On décrit d'abord, en relation avec la figure 4a, les principales étapes du procédé de gestion de politique d'application de règles dans un réseau de communication comprenant des fonctions virtualisées, dite fonctions service SF, mises en oeuvre dans un dispositif correspondant à un contrôleur SDN du réseau, selon un premier mode de réalisation de la technique proposée.

Comme déjà indiqué ci-dessus, la technique proposée tire parti d'une description par un modèle M d'une politique d'application de règle de réseau, lequel modèle correspond donc à un ensemble de règles décrivant cette politique.

Lors d'une étape S1, le contrôleur SDN génère un entête d'encapsulation comprenant un contexte relatif au modèle, ainsi qu'au moins un contexte local associé à au moins une fonction service du réseau.

Lors des étapes S2 et S3, le contrôleur SDN transmet respectivement le contexte local à la fonction service auquel il est associé, afin d'assurer le traitement des paquets, et l'entête d'encapsulation à au moins un routeur de paquets, ou classificateur SCL, afin d'assurer le transfert des paquets.

Plus précisément, l'étape de génération S1 comprend une sous étape d'obtention d'au moins une chaine de politique d'application EC1, correspondant à un ensemble de règles de traitement de paquets par au moins une fonction service, à partir du modèle M décrit ci-dessus.

Une telle chaine de politique d'application EC1 décrit au moins un enchaînement SFC1 d'au moins une des fonctions service SF du domaine donné, en fonction d'au moins une information représentative :
- d'un contrat de politique prédéfini entre un premier et un deuxième groupe d'équipements ou de points de terminaison, EPG1, EPG2, du réseau de communication, un tel contrat correspondant à un ensemble prédéfini de règles de communication entre les deux groupes ;
- d'au moins un point de terminaison EP10 dans le premier groupe EPG1 ;
- d'au moins une caractéristique de paquet, comme par exemple une indication du fait que le paquet est un paquet Internet.

En effet, lorsque l'utilisateur, via son application, a défini les règles de politique dans les contrats entre des groupes de points de terminaison, il peut définir le chainage des fonctions service à mettre en oeuvre pour la politique d'application, via une ou plusieurs chaines de politique d'application EC*i*.

Ainsi, chaque chaine de politique d'application EC*i* est liée à un contrat donné entre deux groupes de points de terminaison et concerne uniquement les points de terminaison qui respectent les exigences/clauses particulières.

L'étape de génération S1 comprend également une sous-étape d'obtention, à partir de la chaine de politique d'application (EC1), d'un entête de contexte et d'un contexte local de politique d'application pour au moins une fonction service.

Ensuite, une sous-étape de génération d'un entête d'encapsulation est mise en oeuvre, à partir de l'entête de contexte, de manière à ce que les paquets encapsulés portent cet entête de contexte.

Ainsi, chaque paquet à transférer dans le réseau est modifié, par un des classificateurs SCL du réseau, par encapsulation, et chaque fonction service a reçu un contexte local lui permettant de mettre en oeuvre les actions adéquates requises par le modèle décrivant la politique d'application de règles.

Lorsque plusieurs fonctions service sont présentes dans un réseau, ce qui est le cas en général (par exemple une fonction service d'inspection de paquet, une fonction service de pare-feu, ...), plusieurs contextes locaux sont obtenus et associés à chacune de ces fonctions service.

On décrit maintenant, en relation avec la figure 4b, les principales étapes du procédé de traitement d'une politique d'application de règles dans un réseau de communication comprenant des fonctions virtualisées, dite fonctions service SF, mises en oeuvre dans au moins une fonction service SF*i* du réseau, selon un premier mode de réalisation de la technique proposée.

Lors d'une étape préalable de réception S4, la fonction service donnée SF*i* reçoit, en provenance du contrôleur SDN du réseau, un contexte local de politique d'application qui lui est associé (I.e. l'un des contexte locaux obtenus lors de l'étape S1 décrite ci-dessus).

Ce contexte local est utilisé par la fonction service pour traiter chaque paquet qu'elle reçoit.

Ainsi, lors d'une étape réception S5, la fonction service reçoit au moins un paquet enrichi avec un entête d'encapsulation par un routeur de paquets, ou classificateur SCL du réseau, et le traite, lors d'une étape de traitement S6, en tenant compte du contexte local de politique d'application associé.

Selon ce mode de réalisation, le traitement appliqué au paquet enrichi par la fonction service correspond par exemple à une étape d'exécution d'au moins une action définie dans le contexte local de politique d'application, en tenant compte d'au moins une caractéristique du paquet enrichi reçu. Par exemple, le type de paquet permet de sélectionner l'action à exécuter, tout comme l'équipement émetteur du paquet, ou encore la chaine de fonctions service qui lui est associée.

L'exécution d'une action délivre notamment un résultat comprenant au moins une information d'identification d'au moins une fonction de service destinatrice *SFj* du paquet enrichi traité, à parti d'informations de l'entête d'encapsulation, du contexte local et de caractéristiques du paquet.

De plus, le traitement du paquet comprend également une étape de mise à jour de l'entête d'encapsulation en fonction du résultat de l'exécution de l'action, notamment pour modifier, le cas échéant, le chemin définissant les fonctions service ultérieures à mettre en oeuvre.

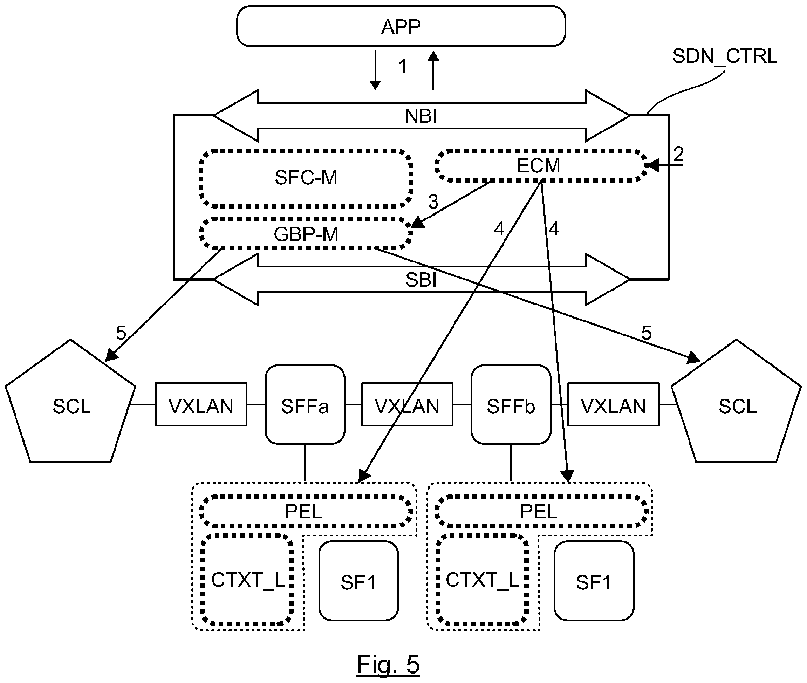

Comme décrit ci-après en relation avec la figure 5, la technique proposée met en oeuvre un module de chaînage de politique d'application ECM au niveau du contrôleur SDN, ainsi qu'un module de logique de politique d'application PEL au niveau de chaque fonction service.

Le module de chaînage de politique d'application ECM est notamment en charge d'obtenir l'entête de contexte et de le contexte local et de les transmettre respectivement à au moins un classificateur en vue d'une encapsulation des paquets et au module de logique de politique d'application PEL de chaque fonction service SF concernée.

Selon une mise en oeuvre particulière de la technique proposée, cet entête de contexte correspond précisément au « Context Header » de l'entête NSH. La prise en compte de cet entête par un classificateur correspond donc à une encapsulation NSH du paquet, de sorte à ce que les métadonnées transportées dans le « Context Header » NSH puissent être interprétées par les transmetteurs de fonctions service SFF en vue de la transmission du paquet vers la fonction service adéquate.

Ces principales étapes permettent donc, à partir d'un modèle d'une politique d'applications de règle dans un réseau, la mise en application granulaire et distribuée de cette politique, au niveau de chaque fonction service du domaine, grâce à des chaînes de politique d'application dynamiques et à la gestion d'un contexte local pour chaque fonction service.

Les étapes plus détaillées et les interactions entre les différents éléments sont décrites ci-après, en relation avec la figure 5.

Comme déjà indiqué ci-dessus, la mise en oeuvre de la technique proposée se situe au niveau du contrôleur SDN, grâce à un module de chaînage de politique d'application ECM, ainsi qu'au niveau de chaque fonction service SF, grâce à un module de logique de politique d'application PEL.

La première étape 1, une fois le modèle défini par l'utilisateur, consiste donc à recevoir, dans le contrôleur SDN, une « intention » pour un chainage de fonctions service. En effet, le principe du modèle est de définir des intentions, sans tenir compte des contraintes/caractéristiques techniques du réseau, permettant ainsi une grande facilité d'utilisation et de définition.

Ce modèle est reçu par le contrôleur SDN via les interfaces de contrôle d'application NBI, puis interprété pour définir un chainage de fonctions service et des actions associées. Cette interprétation est mise en oeuvre par un module SFC-M (en anglais « Service Function Chaining Module »), qui n'a pas connaissance des équipements (ou points de terminaisons) du réseau, mais qui sait duquel partir et auquel arriver. La connaissance des équipements est maîtrisée par le module de gestion de la politique groupée GBP-M.

L'interprétation du modèle délivre donc une ou plusieurs chaines de politique d'application EC*i* décrivant au moins un enchaînement SFC1 d'au moins une des fonctions service SF du domaine donné.

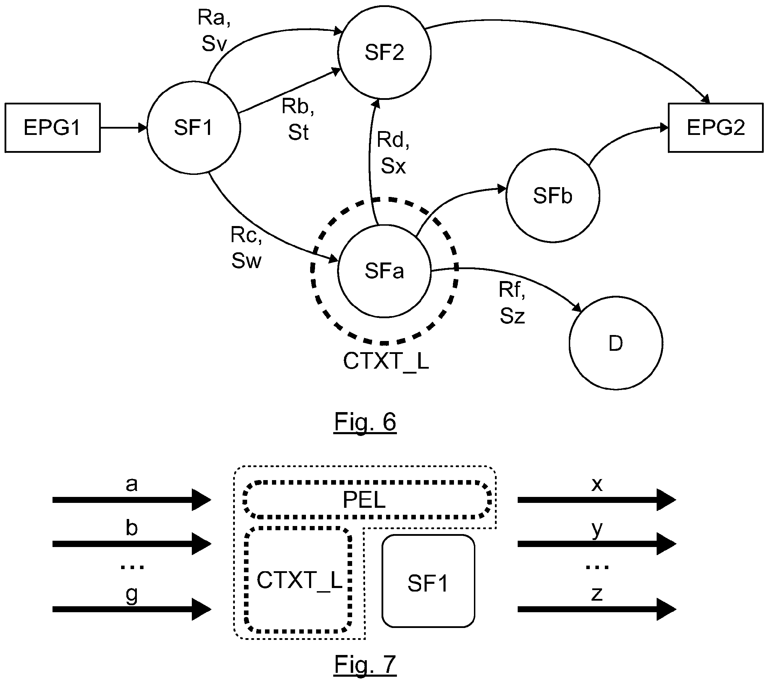

Par exemple, ces chaînes EC*i* sont délivrées sous forme de graphe de mise en application, tel que décrit ci-après en relation avec la figure 6.

Ensuite, lors d'une étape 2, le module de chaînage de politique d'application ECM stocke le graphe de mise en application d'une politique, en stockant d'une part le contexte général de chaînage et en distribuant d'autre part des contextes de chainage locaux à chaque module de logique de politique d'application PEL des fonctions service du domaine.

Pour ce faire, le module de chaînage de politique d'application ECM crée les clauses relatives aux actions des fonctions service (chaque clause correspond à une action d'une fonction service) et génère le contexte NSH correspondant au chainage de politique d'application choisi. Des exemples de clauses et actions seront décrits ci-après, en relation avec la figure 6 également.

Lors d'une étape 3, le module/plugin de chaînage de politique d'application ECM envoie le contexte NSH au module GBP-M pour que ce dernier l'ajoute à l'entête NSH qui est envoyé, lors d'une étape 5 aux classificateurs du domaine. Ces derniers sont en effet en charge de déterminer quel paquet du flux doit entrer dans une chaine donnée de fonctions service, à partir d'une table de politique, et ainsi encapsuler chaque paquet avec l'entête NSH correct.

Par ailleurs, lors d'une étape 4, le module de chaînage de politique d'application ECM envoie le contexte local de politique d'application à chaque module de logique de politique d'application PEL des fonctions service du domaine.

Ainsi, pour un ensemble de règles d'une politique donnée entre deux points de terminaison et un chainage utilisé, la présente technique permet de définir des chaînes de politique d'application pouvant s'appliquer à chaque fonction service, lesquelles ont un ensemble d'actions possibles à effectuer et ont la connaissance d'une logique de chaînage de politique d'application à un niveau local.

On décrit maintenant plus en détails, en relation avec la figure 6, un exemple de chaine de politique d'application.

Comme illustré sur la **figure 6**, chaque noeud d'une chaine de politique d'application *ECi* fait référence à une chaine de fonctions service SF (SFC*i*) donnée et à une fonction service SF*i* donnée. De plus, chaque noeud correspond à des actions de politique d'application à mettre en oeuvre au niveau de la fonction service SF*i* donnée (pas de traitement spécifique, refus du paquet, exécution d'une fonction propre à la fonction service comme par exemple inspection du paquet si la fonction service est un inspecteur de paquet ou ajout de règles de pare-feu si la fonction service est un pare-feu).

Comme déjà indiqué, une chaine de politique d'application EC*i* est relative à un contrat donné entre deux groupes de points de terminaison, et s'applique uniquement aux paquets qui sont concernés, i.e. les paquets qui respectent certaines conditions notamment définies dans les informations de contexte, décrites ci-après.

Dans l'exemple illustré en figure 6, on considère un contrat *contract1* défini entre les deux groupes de points de terminaison EPG1 et EPG2, le groupe EPG1 comprenant par exemple deux points de terminaison EP10 et EP11.

Le domaine comprend quatre fonctions service SF1, SF2, SFa et SFb, et le contrat définit par exemple les deux chaînes de fonctions service suivantes :
- SFC1 : SF1 -> SF2 (enchainement des fonctions service SF1 et SF2) ;
- SFC2 : SF1 -> SFa -> SFb (enchainement des fonctions service SF1, SFa et SFb).

Enfin, une chaine de politique d'application EC1 a été générée pour le contrat *contract1*, définissant les clauses et actions décrites ci-après, grâce à l'entête NSH et aux contextes locaux associés aux différentes fonctions service.

Par exemple, les informations de contexte portées par l'entête NSH sont les suivantes : une application A, un tenant B (titulaire pour les ressources), les points de terminaison EP10 et EP11, le groupe de points de terminaison EPG1, les chaînes SFC1 et SFC2, ainsi que des informations relatives au service, comme par exemple une caractéristique indiquant qu'il s'agit d'un trafic Internet.

La chaine de politique d'application EC1 décrit donc les différents enchaînements de fonctions service, en fonction du point de terminaison concerné, d'au moins une caractéristique du paquet, et de son contenu, ainsi que les différentes actions de chaque fonction service, en fonction du résultat de l'action de la fonction service précédente.

Ainsi, pour chaque fonction service, un contexte local décrit les différentes clauses de définition des actions de la fonction service. Ces différentes clauses sont notamment stockées au niveau de la fonction service et leur interprétation et mise en oeuvre sont effectuées par le module de logique de mise en application PEL de la fonction service concernée, comme illustré en figure 7 décrite ci-après.

Par exemple, pour la fonction service SF1, le contexte local définit les deux clauses suivantes :
- clause 1 : {SFC1, Internet traffic, EP10} ; cette première clause indique qu'un paquet de type « Internet », en provenance du point de terminaison EP10, doit être routé dans la chaine de fonction service SFC1 ;
- clause 2 : {SFC1, Internet traffic, EP11} ; cette deuxième clause indique qu'un paquet de type « Internet », en provenance du point de terminaison EP11, doit être routé dans la chaine de fonction service SFC1.

Par ailleurs, une action de politique d'application EA contient l'action proprement dite à effectuer par la fonction service SF pour traiter le paquet. Chaque action EA peut générer une sortie, et l'action EA suivante peut être mise en oeuvre sur la base de la sortie de l'action EA précédente. Cette logique est notamment définie par l'utilisateur au niveau du modèle, et est stockée dans le module de logique de politique d'application PEL.

Pour la fonction service SF1, les actions définies dans les clauses sont par exemple les suivantes :
- clause 1 : action EA1 : « *Action Inspect 1* » : requiert l'inspection du paquet, lorsqu'il provient du point de terminaison EP10, qu'il correspond à du trafic Internet et qu'il doit être routé dans la chaine de fonctions service SF1. Cette action peut donner deux résultats « a » ou « c », comprenant notamment respectivement les sorties « v » et « w », associées à une information représentative de la fonction service suivante qui traitera le paquet en question, dans la chaine SF1 ; les résultats « v » et « w » peuvent par exemple correspondre respectivement au cas où l'inspection du paquet n'a rien révélé d'anormal et au cas où l'inspection du paquet a détecté une anomalie ;
- clause 2 : action EA2 : « *Action Inspect* 2 » : requiert l'inspection du paquet, lorsqu'il provient du point de terminaison EP11, qu'il correspond à du trafic Internet et qu'il doit être routé dans la chaine de fonctions service SF1. Le résultat de cette action est noté « b » et comprend notamment la sortie « t », associée à une information représentative de la fonction service suivante qui traitera le paquet en question, dans la chaine SF1.

Pour la fonction service SF2, le contexte local définit par exemple les trois clauses suivantes :
- clause 1 : {SFC1, EP10, v} ; cette première clause indique qu'un paquet en provenance du point de terminaison EP10 et dont la sortie du traitement par une fonction service précédente est égale à « v » doit être routé dans la chaine de fonction service SFC1 ;
- clause 2: {SFC1, EP11, t}; cette deuxième clause indique qu'un paquet en provenance du point de terminaison EP11 et dont la sortie du traitement par une fonction service précédente est égale à « t » doit être routé dans la chaine de fonction service SFC1 ;
- clause 3 : {SFC1, x} ; cette troisième clause indique qu'un paquet dont la sortie du traitement par une fonction service précédente est égale à « x » doit être routé dans la chaine de fonction service SFC1.

Les actions définies dans ces clauses sont les suivantes :
- clause 1 : action EA1 : « *Action Deny* » : refus du paquet (celui-ci n'est pas traité et ne sera pas transmis au groupe EPG2), lorsqu'il provient du point de terminaison EP10, qu'il doit être routé dans la chaine de fonctions service SF1 et que la sortie de l'action précédente était « v » ;
- clause 2 : action EA2 : « *Action Allow* » : autorisation du paquet (celui-ci ne subit pas de traitement propre à une clause définie et est directement transmis à la prochaine fonction service), lorsqu'il provient du point de terminaison EP11, qu'il doit être routé dans la chaine de fonctions service SF1 et que la sortie de l'action précédente était « t » ;
- clause 3 : action EA3 : « *Spécifie Action* » : ce type d'action correspond à une action propre à la fonction service, comme par exemple l'ajout de règles de pare-feu si la fonction service est un pare-feu, à mettre en oeuvre dans cet exemple lorsque la sortie de la précédente action était « x ».

Pour la fonction service SFa, le contexte local définit la clause suivante :
- clause 1 : {SFC2, EP10, w} ; cette clause indique qu'un paquet en provenance du point de terminaison EP10 et dont la sortie du traitement par une fonction service précédente est égale à « w » doit être routé dans la chaine de fonction service SFC2 ;
et l'action suivante :
- action EA1 : « *Action DoS* » : une attaque par déni de service est détectée, et le paquet est rejeté (« *Drop* »), lorsqu'il provient du point de terminaison EP10, qu'il doit être routé dans la chaine de fonctions service SF2 et que la sortie de l'action précédente était « w ». Le résultat de cette action est « f » et comprend notamment la sortie « z ». Si les conditions d'applications de la clause ne sont pas remplies, alors le paquet ne relève pas d'une attaque par déni de service et le paquet est transmis à la fonction service SFb.

La description des actions EA reflète donc les fonctionnalités des fonctions service et peuvent être déclinées sur la base des différents types existants de fonctions service.

La figure 7 illustre un exemple de dispositif correspondant à un module de logique de politique d'application PEL, pour la fonction service SF1 intervenant dans la chaine de politique d'application EC1 décrite ci-dessus en relation avec la figure 6.

Le contexte de chaînage local stocké dans cette fonction service SF1 est relatif à toutes les informations nécessaires au module de logique de politique d'application PEL pour :
o gérer la sortie de l'action EA précédente (par exemple a, b ...g) ;
o envoyer la bonne action à effectuer à la fonction service proprement dite, en se basant sur la logique de chainage définie ;
o recevoir le résultat de l'action effectuée pour pouvoir renvoyer le paquet à la fonction service suivante, en se basant sur la logique de chainage définie, et en générant une sortie (par exemple x, y, z).

Ainsi, la technique proposée permet une gestion d'une politique d'application de manière granulaire, dynamique et distribuée en permettant de viser tous les points de terminaison d'un réseau, sans allouer de nouvelles ressources (en terme de calcul et de stockage). De plus, la technique proposée tire parti de la définition d'une politique par un modèle, permettant ainsi une grande facilité d'utilisation et de définition, sans tenir compte des contraintes/caractéristiques techniques du réseau.

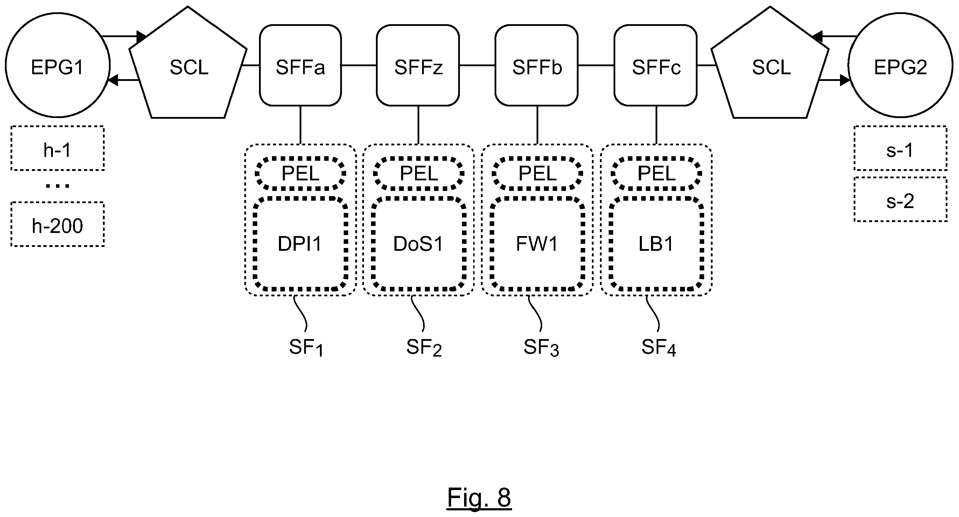

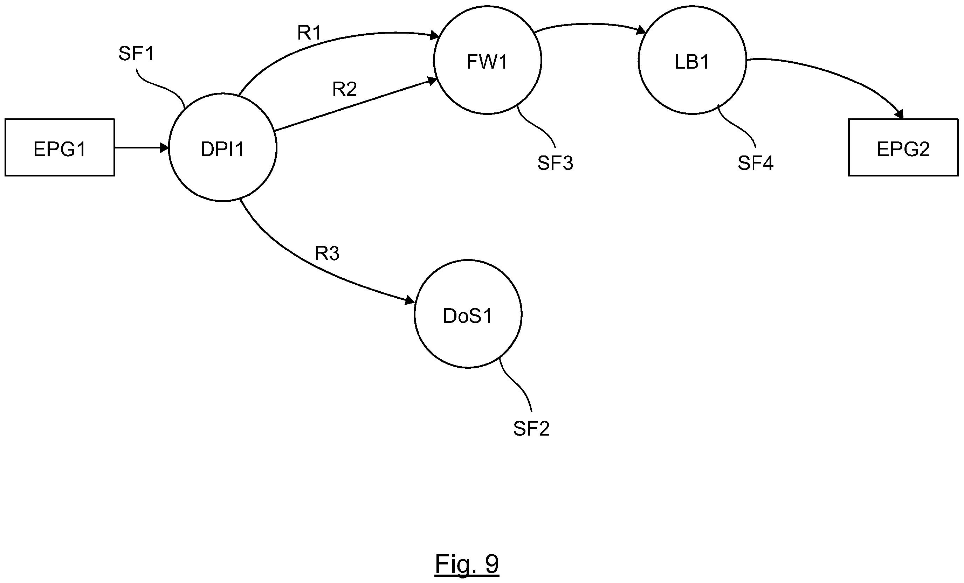

Les figures 8 et 9 illustrent l'exemple d'une entreprise présentant un réseau privé, comprenant des machines clientes, ou équipements h-1, ..., h-200, appartenant à un premier groupe EPG1. Ces machines clientes disposent d'un accès vers des serveurs d'application s-1, s-2, appartenant à un deuxième groupe EPG2.

La communication entre ces deux groupes est décrite à l'aide des modules GBP et SFC d'un contrôleur SDN, par exemple « OpenDaylight », sous la forme d'un contrat C1 et de deux chaînes de fonctions service « *SFC-trafic* » et « *SFC-nettoyeur ».*

La première chaine « *SFC-trafic* » comprend les trois fonctions service suivantes : SF1 correspondant à un inspecteur de paquets DPI1, SF3 correspondant à un pare-feu FW1 et SF4 correspondant à un répartiteur de charge LB1,

La deuxième chaine « *SFC-nettoyeur »* comprend les deux fonctions service suivantes : SF1 correspondant à l'inspecteur de paquets DPI1 et SF2 un nettoyeur de trafic DoS1.

Ainsi, les paquets échangés entre ces deux groupes EPG1 et EPG2 sont routés dans la chaine « *SFC-trafic* » et passent par l'inspecteur de paquets DPI1 pour récupérer des informations de diagnostiques réseaux, le pare-feu FW1 et un répartiteur de charge LB1.

L'autre chaine de services « *SFC-nettoyeur »* est définie dans le cas où l'inspecteur de paquets DPI1 détecte un comportement malicieux et permet de se débarrasser des paquets concernés.

Ainsi, le modèle de politique d'application de règles permet de déterminer que certaines machines clientes du groupe EPG1 doivent être soumises à une inspection de paquets par l'inspecteur de paquets DPI1 en vue de détecter un éventuel comportement malicieux. En fonction du comportement détecté, s'il est avéré, les paquets concernés se verront soit attribuer dynamiquement l'autre chaine de service « *SFC-nettoyeur »,* qui acheminera les paquets vers le nettoyeur de trafic DoS1, soit subiront des restrictions de la part du pare-feu FW1.

Pour permettre l'application de cette logique, une chaine de politique d'application EC1 est définie, et illustrée en figure 9.

Cette chaine de politique d'application EC1 permet, de manière granulaire et dynamique, de soumettre par exemple les paquets des machines clientes h-1 et h-2 à une détection de comportement malicieux et se débarrasser des paquets suspicieux. En revanche, les paquets non concernés par la chaine de politique d'application EC1 sont traités tel que défini initialement par les modules GBP et SFC.

Ainsi, pour la chaine de politique d'application EC1 associée au contrat C1, les clauses et actions sont décrites ci-après, grâce à l'entête NSH et aux contextes locaux associés aux différentes fonctions service.

Par exemple, pour la chaine de politique d'application EC1, les informations de contexte portées par l'entête NSH sont les suivantes : une application A, un tenant B (titulaire pour les ressources), les machines clientes h-1 et h-2, le groupe de machines clientes EPG1, les chaînes *SFC-trafic* et *SFC-nettoyeur.*

Cette description du contrat et de la chaine de politique d'application EC1 peut s'écrire comme suit :
Contract name: C1
Endpoint Groups: EPG1, EPG2
Enforcement Chain: EC1
Context information: {ApplicationA, tenantB, h-1/h-2, EPG:EPG1, *SFC-trafic*, *SFC-nettoyeur*}

Ensuite, pour la fonction service SF1 (DPI1), le contexte local définit la clause d'inspection de paquets suivante :
- clause *Inspect :* {*SFC-trafic*, application A, tenant B, équipements h-1/h-21 ; cette première clause ne comprend pas d'indication relative au paquet et spécifie qu'un paquet en provenance de l'équipement h-1 ou h-2, doit être routé dans la chaine de fonction service *SFC-trafic.*

Cette description du contexte local peut s'écrire comme suit :
DPI1 local context chain:

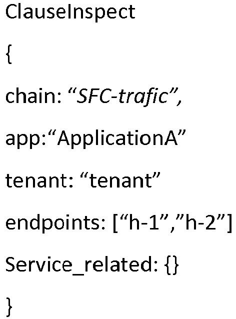

Par ailleurs, une action de politique d'application EA contient l'action proprement dite à effectuer par la fonction service SF1 pour traiter le paquet.

Pour la fonction service SF1, les actions définies dans les clauses sont par exemple les suivantes :
- clause *Inspect* : « *Action Inspect* » : requiert l'inspection du paquet, lorsqu'il provient de l'équipement h-1 ou h-2 et qu'il doit être routé dans la chaine de fonctions service *SFC-trafic.* Cette action peut donner deux résultats R1 ou R3, correspondant respectivement au cas où l'inspection du paquet n'a rien révélé d'anormal (le paquet est alors transmis à la fonction service suivante de la chaine *SFC-trafic*, c'est-à-dire à la fonction service SF3 (pare-feu FW1), avec une liste de restrictions *restriction_list* pour configurer le pare-feu), et au cas où l'inspection du paquet a détecté une anomalie, auquel cas le paquet change de chaine de fonctions service et est routé dans la chaine *SFC-nettoyeur*, c'est-à-dire vers la fonction service SF2 (nettoyeur DoS1) ;
- clause *Default* : « *Action Allow* » : autorisation du paquet (celui-ci ne subit pas de traitement propre à une clause définie et est directement transmis à la prochaine fonction service), lorsqu'il provient de l'équipement h-1 ou h-2 et qu'il doit être routé dans la chaine de fonctions service *SFC-trafic.* Cette action donne le résultat R2 et le paquet alors transmis à la fonction service suivante de la chaine *SFC-trafic*, c'est-à-dire à la fonction service SF3 (pare-feu FW1).

Pour la fonction service SF3 (le pare-feu FW1), le contexte local définit la clause d'application de règles de pare-feu suivante :
- clause *Rules* : {*SFC-trafic*, application A, tenant B, *restriction_list*} ; cette première clause spécifie qu'un paquet dont la sortie du traitement par une fonction service précédente est égale à R1 (*restriction_list*) doit être routé dans la chaine de fonction service *SFC-trafic.*

Cette description du contexte local peut s'écrire comme suit :
FW1 local context chain:

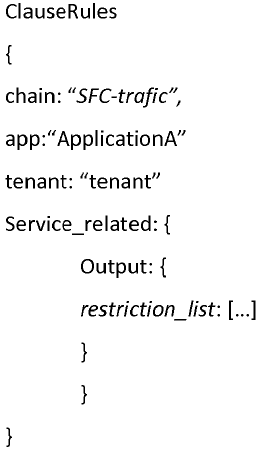

Pour la fonction service SF3 (le pare-feu FW1), les actions définies dans les clauses sont par exemple les suivantes :
- clause *Rules :* « *Action AddRules* » : application des règles de pare-feu définie par la liste *restriction_list* et transmission du paquet vers la fonction service suivante de la chaine *SFC-trafic*, c'est-à-dire SF4 (répartiteur de charge LB1) ;
- clause *Default* : « *Action Allow* » : autorisation du paquet (celui-ci ne subit pas de traitement propre à une clause définie et est directement transmis à la prochaine fonction service), lorsque la sortie du traitement par une fonction service précédente est égale à R1 (*restriction_list*) et qu'il doit être routé dans la chaine de fonction service *SFC-trafic.* Le paquet est alors transmis à la fonction service suivante de la chaine *SFC-trafic*, c'est-à-dire SF4 (répartiteur de charge LB1).

La fonction service SF2 (nettoyeur DoS1) est quant à elle en charge de vérifier que le paquet entrant est malicieux et le supprime si tel est le cas.

Ainsi, on a vu que les paquets en provenance des équipements h-1 ou h-2 peuvent être routés, selon leur contenu, dans la chaine *SFC-trafic* ou la chaine *SFC-nettoyeur* (lorsqu'ils sont détectés comme ayant un comportement malicieux), alors que les paquets en provenance des autres équipements du groupe EPG1 ne sont pas concernés par la chaine de politique d'application EC1.

## Revendications

1. Procédé de gestion d'une politique d'application de règles dans un réseau de communication virtualisé comprenant des fonctions virtualisées, dites fonctions service (SF), ledit procédé de gestion comprenant les étapes suivantes mises en oeuvre par un contrôleur SDN dudit réseau :
• génération (S1), à partir d'un ensemble de règles décrivant ladite politique, dit modèle (M), d'un entête d'encapsulation comprenant un entête de contexte permettant de transporter des métadonnées relatives à un chemin pouvant être partagées par au moins une desdites fonctions service SF (SF*i*) et d'au moins un contexte local de politique d'application associé à au moins une desdites fonctions service (SF*i*), ledit au moins un contexte local comprenant au moins une définition d'au moins une action à effectuer par ladite au moins une desdites fonctions service (SF*i*) ;
• transmission (S2) dudit au moins un contexte local à ladite au moins une fonction service (SFi) ;
• transmission (S3) dudit entête d'encapsulation à au moins un routeur de paquets, dit classificateur (SCL).

2. Procédé de gestion selon la revendication 1, dans lequel ladite étape de génération comprend les sous-étapes suivantes :
• obtention, à partir dudit modèle (M) d'au moins un ensemble de règles de traitement de paquets par au moins une desdites fonctions service (SFi), dit chaine de politique d'application (EC1) ;
• obtention, à partir de ladite au moins une chaine de politique d'application (EC1), dudit entête de contexte et dudit au moins un contexte local de politique d'application pour au moins une desdites fonctions service (SF*i*) ;
• génération dudit entête d'encapsulation à partir dudit entête de contexte.

3. Procédé de gestion selon la revendication 2, dans lequel ladite au moins une chaine de politique d'application (EC1) décrit au moins un enchainement (SFC1) d'au moins une desdites fonctions service (SF*i*) en fonction d'au moins une information représentative d'un ensemble prédéfini de règles de communication, dit contrat, entre un premier et un deuxième groupe d'équipements dudit réseau de communication (EPG1, EPG2), ledit premier groupe (EPG1) comprenant au moins un équipement émetteur d'au moins un paquet et ledit deuxième groupe (EPG2) comprenant au moins un équipement destinataire d'au moins un paquet, et/ou d'une information représentative d'au moins un équipement (EP10) dans ledit premier groupe (EPG1) et/ou d'au moins une caractéristique de paquet.

4. Procédé de gestion selon l'une quelconque des revendications 1 à 3, dans lequel ladite transmission dudit entête d'encapsulation à au moins un classificateur (SCL) comprend une étape de configuration dudit classificateur de service (SCL) de sorte à ce que ledit classificateur de service (SCL) délivre, pour au moins un paquet entrant, au moins un paquet enrichi avec ledit entête d'encapsulation.

5. Procédé de traitement d'une politique d'application de règles dans un réseau de communication comprenant des fonctions virtualisées, dite fonctions service (SF),
ledit procédé de traitement comprenant, dans au moins une desdites fonctions service (SF*i*), une étape préalable de réception (S4), en provenance d'un contrôleur SDN dudit réseau, d'un contexte local de politique d'application associé à ladite au moins une fonction service (SF*i*), ledit au moins un contexte local comprenant au moins une définition d'au moins une action à effectuer par ladite au moins une desdites fonctions service (SFi), et les étapes suivantes :
• réception (S5) d'au moins un paquet enrichi avec un entête d'encapsulation par un routeur de paquets, dit classificateur (SCL) dudit réseau;
• traitement (S6) dudit au moins un paquet enrichi, en tenant compte dudit contexte local de politique d'application associé à ladite au moins une fonction service (SF*i*).

6. Procédé de traitement selon la revendication 5, dans lequel ledit traitement comprend une étape d'exécution d'au moins une action définie dans ledit contexte local de politique d'application, en tenant compte d'au moins une caractéristique dudit au moins un paquet enrichi et délivrant un résultat comprenant au moins une information d'identification d'au moins une fonction de service destinatrice (*SFj*) dudit paquet enrichi traité.

7. Procédé de traitement selon la revendication 6, dans lequel ledit traitement comprend également une étape de mise à jour dudit entête d'encapsulation en fonction dudit résultat de ladite étape d'exécution.

8. Module contrôleur SDN comprenant :
• des moyens de génération, à partir d'un ensemble de règles, dit modèle (M), décrivant une politique d'application de règles dans un réseau de communication virtualisé comprenant des fonctions virtualisées, dites fonctions service (SF), d'un entête d'encapsulation comprenant un entête de contexte permettant de transporter des métadonnées relatives à un chemin pouvant être partagées par au moins une desdites fonctions service SF (SFi) et d'au moins un contexte local de politique d'application associé à au moins une desdites fonctions service (SFi), ledit au moins un contexte local comprenant au moins une définition d'au moins une action à effectuer par ladite au moins une desdites fonctions service (SF*i*) ;
• des moyens de transmission dudit au moins un contexte local à ladite au moins une fonction service (SFi) ;
• des moyens de transmission dudit entête d'encapsulation à au moins un routeur de paquets, dit classificateur (SCL).

9. Module fonction virtualisée, dit module fonction service, dans un réseau de communication virtualisé, ledit module fonction virtualisée comprenant un module de logique de politique d'application (PEL) comprenant :
• des moyens de réception, en provenance d'un contrôleur SDN dudit réseau, d'un contexte local de politique d'application associé audit module fonction service, ledit contexte local comprenant au moins une définition d'au moins une action à effectuer ledit module fonction service ;
• des moyens de réception d'au moins un paquet enrichi avec un entête d'encapsulation par un routeur de paquets, dit classificateur (SCL) dudit réseau;
• des moyens de traitement dudit au moins un paquet enrichi, en tenant compte dudit contexte local de politique d'application.

10. Système comprenant un module contrôleur SDN selon la revendication 8, un module fonction service selon la revendication 9 et un routeur de paquets, dit classificateur (SCL) recevant un entête d'encapsulation dudit contrôleur SDN et délivrant, pour au moins un paquet entrant, au moins un paquet enrichi avec ledit entête d'encapsulation.

11. Produit programme d'ordinateur comprenant des instructions de code de programme pour la mise en oeuvre d'un procédé selon l'une quelconque des revendications 1 à 4 ou 5 à 7, lorsqu'il est exécuté par un processeur.

12. Support d'informations comportant des instructions de programme adaptées à la mise en oeuvre d'un procédé selon l'une quelconque des revendications 1 à 4 ou 5 à 7, lorsque ledit programme est exécuté par un processeur.

## Patentansprüche

1. Verwaltungsverfahren zum Verwalten einer Regelanwendungsrichtlinie in einem virtualisierten Kommunikationsnetz, das virtualisierte Funktionen, Dienstfunktionen (SF) genannt, umfasst, wobei das Verwaltungsverfahren die folgenden von einem SDN-Controller des Netzes ausgeführten Schritte umfasst:
• Erzeugen (S1), ausgehend von einer die Richtlinie beschreibenden Regelmenge, Modell (M) genannt, eines Kapselungsheaders, der einen Kontextheader umfasst, der es ermöglicht, Metadaten bezüglich eines Pfads zu transportieren, der von mindestens einer der Dienstfunktionen SF (SFi) geteilt werden kann, und mindestens eines lokalen Anwendungsrichtlinienkontextes, der mindestens einer der Dienstfunktionen (SFi) zugeordnet ist, wobei der mindestens eine lokale Kontext mindestens eine Definition mindestens einer von der mindestens einen der Dienstfunktionen (SFi) durchzuführenden Aktion umfasst;
• Übertragen (S2) des mindestens einen lokalen Kontextes an die mindestens eine Dienstfunktion (SFi);
• Übertragen (S3) des Kapselungsheaders an mindestens einen Paketrouter, Klassifikator (SCL) genannt.

2. Verwaltungsverfahren nach Anspruch 1, bei dem der Schritt des Erzeugens die folgenden Teilschritte umfasst:
• Erhalten, ausgehend von dem Modell (M), mindestens einer Regelmenge zur Paketverarbeitung durch mindestens eine der Dienstfunktionen (SFi), Anwendungsrichtlinienkette (EC1) genannt;
• Erhalten, ausgehend von der mindestens einen Anwendungsrichtlinienkette (EC1), des Kontextheaders und des mindestens einen lokalen Anwendungsrichtlinienkontextes für mindestens eine der Dienstfunktionen (SFi);
• Erzeugen des Kapselungsheaders ausgehend von dem Kontextheader.

3. Verwaltungsverfahren nach Anspruch 2, bei dem die mindestens eine Anwendungsrichtlinienkette (EC1) mindestens eine Verkettung (SFC1) mindestens einer der Dienstfunktionen (SFi) in Abhängigkeit von mindestens einer Information, die für eine vorgegebene Menge von Kommunikationsregeln, Vertrag genannt, zwischen einer ersten und einer zweiten Gruppe von Geräten des Kommunikationsnetzes (EPG1, EPG2) repräsentativ ist, wobei die erste Gruppe (EPG1) mindestens ein Gerät umfasst, das Sender mindestens eines Pakets ist, und wobei die zweite Gruppe (EPG2) mindestens ein Gerät umfasst, das Empfänger mindestens eines Pakets ist, und/oder von einer Information, die für mindestens ein Gerät (EP10) in der ersten Gruppe (EPG1) und/oder mindestens ein Paketmerkmal repräsentativ ist, beschreibt.

4. Verwaltungsverfahren nach einem der Ansprüche 1 bis 3, bei dem die Übertragung des Kapselungsheaders an mindestens einen Klassifikator (SCL) einen Schritt des Konfigurierens des Dienstklassifikators (SCL) umfasst, so dass der Dienstklassifikator (SCL), für mindestens ein eingehendes Paket, mindestens ein mit dem Kapselungsheader angereichertes Paket ausgibt.

5. Verarbeitungsverfahren zum Verarbeiten einer Regelanwendungsrichtlinie in einem Kommunikationsnetz, das virtualisierte Funktionen, Dienstfunktionen (SF) genannt, umfasst,
wobei das Verarbeitungsverfahren, bei mindestens einer der Dienstfunktionen (SFi), einen vorherigen Schritt des Empfangens (S4), von einem SDN-Controller des Netzes, eines lokalen Anwendungsrichtlinienkontextes, der der mindestens einen Dienstfunktion (SFi) zugeordnet ist,
wobei der mindestens eine lokale Kontext mindestens eine Definition mindestens einer von der mindestens einen der Dienstfunktionen (SFi) auszuführenden Aktion umfasst, und die folgenden Schritte umfasst:
• Empfangen (S5) mindestens eines Pakets, das von einem Paketrouter, Klassifikator (SCL) des Netzes genannt, mit einem Kapselungsheader angereichert wurde;
• Verarbeiten (S6) des mindestens einen angereicherten Pakets, wobei der lokale Anwendungsrichtlinienkontext berücksichtigt wird, der der mindestens einen Dienstfunktion (SFi) zugeordnet ist.

6. Verarbeitungsverfahren nach Anspruch 5, bei dem die Verarbeitung einen Schritt des Ausführens mindestens einer in dem lokalen Anwendungsrichtlinienkontext definierten Aktion umfasst, wobei mindestens ein Merkmal des mindestens einen angereicherten Pakets berücksichtigt wird und wobei ein Ergebnis ausgegeben wird, das mindestens eine Information zur Identifizierung mindestens einer Empfängerdienstfunktion *(SFj)* des verarbeiteten angereicherten Pakets umfasst.

7. Verarbeitungsverfahren nach Anspruch 6, bei dem die Verarbeitung auch einen Schritt des Aktualisierens des Kapselungsheaders in Abhängigkeit von dem Ergebnis des Ausführungsschritts umfasst.

8. SDN-Controller-Modul, umfassend:
• Mittel zum Erzeugen, ausgehend von einer Regelmenge, Modell (M) genannt, die eine Regelanwendungsrichtlinie in einem virtualisierten Kommunikationsnetz beschreibt, das virtualisierte Funktionen, Dienstfunktionen (SF) genannt, umfasst, eines Kapselungsheaders, der einen Kontextheader umfasst, der es ermöglicht, Metadaten bezüglich eines Pfads zu transportieren, der von mindestens einer der Dienstfunktionen SF (SFi) geteilt werden kann, und mindestens eines lokalen Anwendungsrichtlinienkontextes, der mindestens einer der Dienstfunktionen (SFi) zugeordnet ist, wobei der mindestens eine lokale Kontext mindestens eine Definition mindestens einer von der mindestens einen der Dienstfunktionen (SFi) durchzuführenden Aktion umfasst;
• Mittel zum Übertragen des mindestens einen lokalen Kontextes an die mindestens eine Dienstfunktion (SFi);
• Mittel zum Übertragen des Kapselungsheaders an mindestens einen Paketrouter, Klassifikator (SCL) genannt.

9. Virtualisierte-Funktion-Modul, Dienstfunktionsmodul genannt, in einem virtualisierten Kommunikationsnetz, wobei das Virtualisierte-Funktion-Modul ein Anwendungsrichtlinienlogikmodul (PEL) umfasst, umfassend:
• Mittel zum Empfangen, von einem SDN-Controller des Netzes, eines lokalen Anwendungsrichtlinienkontextes, der dem Dienstfunktionsmodul zugeordnet ist, wobei der lokale Kontext mindestens eine Definition mindestens einer von dem Dienstfunktionsmodul auszuführenden Aktion umfasst;
• Mittel zum Empfangen mindestens eines Pakets, das von einem Paketrouter, Klassifikator (SCL) des Netzes genannt, mit einem Kapselungsheader angereichert wurde;
• Mittel zum Verarbeiten des mindestens einen angereicherten Pakets, wobei der lokale Anwendungsrichtlinienkontext berücksichtigt wird.

10. System, umfassend ein SDN-Controller-Modul nach Anspruch 8, ein Dienstfunktionsmodul nach Anspruch 9 und einen Paketrouter, Klassifikator (SCL) genannt, der einen Kapselungsheader von dem SDN-Controller empfängt und, für mindestens ein eingehendes Paket, mindestens ein mit dem Kapselungsheader angereichertes Paket ausgibt.

11. Computerprogrammprodukt, das Programmcodeanweisungen umfasst, die bei seiner Ausführung durch einen Prozessor das Verfahren nach einem der Ansprüche 1 bis 4 oder 5 bis 7 ausführen.

12. Datenträger, der Programmanweisungen enthält, die zur Ausführung des Verfahrens nach einem der Ansprüche 1 bis 4 oder 5 bis 7 bei der Ausführung des Programms durch einen Prozessor geeignet sind.

## Claims

1. Method for managing a rules application policy in a virtualized communication network comprising virtualized functions, referred to as service functions (SF), said management method comprising the following steps implemented by an SDN controller of said network:
• generating (S1), from a set of rules describing said policy, referred to as a model (M), an encapsulation header comprising a context header for transporting metadata relating to a path and able to be shared by at least one of said service functions SF (SFi) and at least one local application policy context associated with at least one of said service functions (SFi), said at least one local context comprising at least one definition of at least one action to be carried out by said at least one of said service functions (SFi);
• transmitting (S2) said at least one local context to said at least one service function (SFi);
• transmitting (S3) said encapsulation header to at least one packet router, referred to as a classifier (SCL) .

2. Management method according to Claim 1, wherein said generating step comprises the following sub-steps:
• obtaining, from said model (M), at least one set of rules for the processing of packets by at least one of said service functions (SFi), referred to as an application policy chain (EC1);
• obtaining, from said at least one application policy chain (EC1), said context header and said at least one local application policy context for at least one of said service functions (SFi);
• generating said encapsulation header from said context header.

3. Management method according to Claim 2, wherein said at least one application policy chain (EC1) describes at least one chaining (SFC1) of at least one of said service functions (SFi) on the basis of at least one item of information representative of a predefined set of communication rules, referred to as a contract, between a first and second group of equipments of said communication network (EPG1, EPG2), said first group (EPG1) comprising at least one equipment transmitting at least one packet and said second group (EPG2) comprising at least one equipment intended to receive at least one packet, and/or an item of information representative of at least one equipment (EP10) in said first group (EPG1) and/or of at least one packet feature.

4. Management method according to any one of Claims 1 to 3, wherein said transmission of said encapsulation header to at least one classifier (SCL) comprises a step of configuring said service classifier (SCL) such that said service classifier (SCL) delivers, for at least one incoming packet, at least one packet enriched with said encapsulation header.

5. Method for processing a rules application policy in a communication network comprising virtualized functions, referred to as service functions (SF),
said processing method comprising, in at least one of said service functions (SFi), a preliminary step of receiving (S4), from an SDN controller of said network, a local application policy context associated with said at least one service function (SFi), said at least one local context comprising at least one definition of at least one action to be carried out by said at least one of said service functions (SFi), and the following steps:
• receiving (S5) at least one packet enriched with an encapsulation header by a packet router, referred to as a classifier (SCL) of said network;
• processing (S6) said at least one enriched packet, taking into account said local application policy context associated with said at least one service function (SFi).

6. Processing method according to Claim 5, wherein said processing comprises a step of executing at least one action defined in said local application policy context, taking into account at least one feature of said at least one enriched packet and delivering a result comprising at least one item of identification information in relation to at least one recipient service function *(SFj)* of said processed enriched packet.

7. Processing method according to Claim 6, wherein said processing also comprises a step of updating said encapsulation header on the basis of said result of said execution step.

8. SDN controller module comprising:
• means for generating, from a set of rules, referred to as a model (M), describing a rules application policy in a virtualized communication network comprising virtualized functions, referred to as service functions (SF), an encapsulation header comprising a context header for transporting metadata relating to a path and able to be shared by at least one of said service functions SF (SF*i*) and at least one local application policy context associated with at least one of said service functions (SF*i*), said at least one local context comprising at least one definition of at least one action to be carried out by said at least one of said service functions (SF*i*);
• means for transmitting said at least one local context to said at least one service function (SFi);
• means for transmitting said encapsulation header to at least one packet router, referred to as a classifier (SCL) .

9. Virtualized function module, referred to as a service function module, in a virtualized communication network, said virtualized function module comprising an application policy logic module (PEL) comprising:
• means for receiving, from an SDN controller of said network, a local application policy context associated with said service function module, said local context comprising at least one definition of at least one action to be carried out by said service function module;
• means for receiving at least one packet enriched with an encapsulation header by a packet router, referred to as a classifier (SCL) of said network;
• means for processing said at least one enriched packet, taking into account said local application policy context.

10. System comprising an SDN controller module according to Claim 8, a service function module according to Claim 9 and a packet router, referred to as a classifier (SCL), receiving an encapsulation header from said SDN controller and delivering, for at least one incoming packet, at least one packet enriched with said encapsulation header.

11. Computer program product comprising program code instructions for implementing a method according to any one of Claims 1 to 4 or 5 to 7 when it is executed by a processor.

12. Information carrier comprising program instructions designed to implement a method according to any one of Claims 1 to 4 or 5 to 7 when said program is executed by a processor.
